# EUROPEAN PATENT APPLICATION

(11) **EP 4 180 698 A1**
(43) Date of publication of application: **17.05.2023**
(21) Application number: 22206099.8
(22) Date of filing: 08.11.2022
(51) Int. Cl.: F16K 11/074, F16K 25/00, A47C 7/46, A47C 27/08

(54) **AIR SUPPLY DEVICE**

(30) Priority: 10.11.2021 JP 2021183360
(71) Applicant: Funai Electric Co., Ltd., Daito, Osaka, 574-0013 (JP)
(72) Inventor: WAKABAYASHI, Naoyuki, Daito, Osaka, 574-0013 (JP); MURAYAMA, Manabu, Daito, Osaka, 574-0013 (JP); SOGAWA, Teruaki, Daito, Osaka, 574-0013 (JP); HAMADA, Shingo, Daito, Osaka, 574-0013 (JP); YODA, Hideki, Daito, Osaka, 574-0013 (JP)
(74) Representative: Global IP Europe Patentanwaltskanzlei

(57) **Abstract**

An air supply device (100) comprises a pump (2) and a flow path switching unit (1). The pump (2) is configured to supply air. The flow path switching unit (1) includes a pedestal part (11) forming a flow path from the pump to at least one object, a rotating part (12) rotatably provided with respect to the pedestal part to switch the flow path, and a sheet member (13) disposed between the pedestal part (11) and the rotating part (12). The sheet member (13) has a first layer (13a) and a second layer (13b) that are stacked in a direction directing from the rotating part to the pedestal part. The first layer has a smaller elastic modulus than the second layer. The second layer has a smaller friction coefficient than the first layer.

## Description

This application claims priority to Japanese Patent Application No. 2021-183360 filed in Japan on November 10, 2021.

### BACKGROUND

### Field of the Invention

This invention generally relates to an air supply device. More specifically, this invention relates to an air supply device provided with a flow path switching unit. Background Information

Generally, an air supply device is equipped with a flow path switching unit (see, for example, JP H11-46934 A.

JP H11-46934 A discloses a device equipped with an air switching valve for supplying and exhausting air and an air pump for supplying air to the air switching valve. In JP H11-46934 A, the air switching valve includes a disc-shaped fixed plate, a rotor provided on the fixed plate, and a compression spring that pressurizes the rotor against the fixed plate.

### SUMMARY

However, when a rotating part (the rotor) and a pedestal (the fixed plate) are pressed together by the compression spring as in JP H11-46934 A, the pressing force of a spring member alone is weak and a gap is formed between the rotating part and the pedestal, which may cause air to leak. Therefore, it is considered to increase the size of the spring member and to increase the pressing force. However, there is a problem that by increasing the pressing force, the friction coefficient when rotating the rotating part increases, and that the rotating part does not rotate smoothly.

One object of this disclosure is to provide an air supply device capable of suppressing air leakage and smoothly rotating the rotating part.
(1) In view of the state of the know technology, an air supply device according to a first aspect of this disclosure comprises a pump and a flow path switching unit. The pump is configured to supply air. The flow path switching unit includes a pedestal part forming a flow path from the pump to at least one object, a rotating part rotatably provided with respect to the pedestal part to switch the flow path, and a sheet member disposed between the pedestal part and the rotating part. The sheet member has a first layer and a second layer that are stacked in a direction directing from the rotating part to the pedestal part. The first layer has a smaller elastic modulus than the second layer. The second layer has a smaller friction coefficient than the first layer.
   The air supply device according to the first aspect of this disclosure, as described above, comprises the sheet member disposed between the pedestal part and the rotating part. The sheet member has the first layer and the second layer that are stacked in the direction directing from the rotating part to the pedestal part. The first layer has a smaller elastic modulus than the second layer. The second layer has a smaller friction coefficient than the first layer. With this configuration, the first layer of the sheet member has a smaller elastic modulus than the second layer. Therefore, the rotating part or the pedestal part and the sheet member can closely contact to each other by elastic deformation of the first layer, and thus formation of a gap can be prevented. As a result, since the first layer functions as a sealing layer, air leakage can be suppressed. In addition, since the second layer has a smaller friction coefficient than the first layer, sliding of the rotating part against the pedestal part can be facilitated compared to a case in which only a first layer is provided, and thus the rotating part can be rotated smoothly against the pedestal part. As a result, air leakage can be suppressed and the rotating part can be rotated smoothly.
(2) In accordance with a preferred embodiment according to the air supply device mentioned above, the first layer is located closer to the pedestal part than the second layer. The second layer is located closer to the rotating part than the first layer. Thus, the first layer is located on the pedestal part side of the sheet member and the second layer is located on the rotating part side, for example. With this configuration, the sheet member and the pedestal part can closely contact to each other by contacting the pedestal part and the first layer having a small elastic modulus. In addition, the rotating part can be rotated more smoothly by contacting the rotating part and the second layer having a small friction coefficient.
(3) In accordance with a preferred embodiment according to any one of the air supply devices mentioned above, the first layer closely contacts the pedestal part in accordance with undulations that are minute irregularities in a surface of the pedestal part. With this configuration, even when there are undulations that are minute irregularities in the surface of the pedestal part, the pedestal part and the sheet member can closely contact to each other, and thus it is possible to prevent a gap from being formed between the pedestal part and the sheet member.
(4) In accordance with a preferred embodiment according to any one of the air supply devices mentioned above, the sheet member includes a first sheet forming the first layer and a second sheet forming the second layer. The second sheet is provided separately from the first sheet. With this configuration, the first layer and the second layer are provided separately. Therefore, the first sheet can be changed to a first sheet having a smaller elastic modulus as appropriate, and the second sheet can be changed to a second sheet having a smaller friction coefficient as appropriate. Thus, the sheet member and the pedestal part can more appropriately and closely contact to each other and the rotating part can be more appropriately and smoothly rotated.
(5) In accordance with a preferred embodiment according to any one of the air supply devices mentioned above, the first layer includes an elastomer and the second layer includes a resin having a smaller friction coefficient than the first layer. With this configuration, for example, when the second layer includes nylon, which is a resin having a smaller friction coefficient, the elastic modulus of the first layer can be smaller than that of the second layer since the elastomer has a smaller elastic modulus than the nylon, and the friction coefficient of the second layer can be smaller than that of the first layer.
(6) In accordance with a preferred embodiment according to any one of the air supply devices mentioned above, the sheet member is attached to the pedestal part. With this configuration, when the sheet member and the pedestal part are each provided with a hole for forming a flow path, the hole provided in the sheet member can be easily aligned to the hole in the pedestal part.
(7) In accordance with a preferred embodiment according to any one of the air supply devices mentioned above, the air supply device further comprises a spring member disposed on a surface of the rotating part that faces away from the pedestal part. The spring member is configured to press the rotating part against the pedestal part. With this configuration, since the spring member presses the rotating part, the pedestal part, the sheet member and the rotating part can more closely contact to each other. As a result, it is possible to prevent the formation of a gap between the rotating part and the pedestal part and to further suppress air leakage.
(8) In accordance with a preferred embodiment according to any one of the air supply devices mentioned above, the spring member is configured to press a vicinity of an outer peripheral portion of the rotating part. With this configuration, it is possible to prevent deformation of an outer peripheral portion of the sheet member that is pressed through the rotating part in a direction opposite to a direction in which the rotating part is pressed. The vicinity of the outer peripheral portion includes the outer peripheral portion and a position slightly spaced apart from the outer peripheral portion.
(9) In accordance with a preferred embodiment according to any one of the air supply devices mentioned above, the air supply device further comprises at least one object connection port for supplying air to the at least one object. The spring member is configured such that a force to press down the rotating part is greater than a force obtained by a product of a sum of a cross-sectional area of the at least one object connection port and a maximum value of an air pressure inside the at least one object. With this configuration, the force of the spring member to press down the rotating part is greater than the internal pressure that is applied to the flow path switching unit from the at least one object and is obtained by the product of the sum of the cross-sectional area of the at least one object connection port and the maximum value of the air pressure inside the at least one object. Thus, it is possible to prevent a gap from being formed by the internal pressure from the at least one object that tends to push up the pedestal part.
(10) In accordance with a preferred embodiment according to any one of the air supply devices mentioned above, the air supply device further comprises a disc-shaped pressure member disposed between the spring member and the rotating part. The rotating part is configured to be pressed against the pedestal part by the spring member and the pressure member. With this configuration, the rotating part is pressed against the pedestal part by the pressure member. Thus, there is no need to increase the size of the spring member in order to increase the pressing force of the spring member. As a result, even with a small spring member, it is possible to prevent the formation of a gap between the rotating part and the pedestal part.
(11) In accordance with a preferred embodiment according to any one of the air supply devices mentioned above, the spring member contacts the rotating part to directly press the rotating part against the pedestal part.
(12) In accordance with a preferred embodiment according to any one of the air supply devices mentioned above, the flow path switching unit further includes a drive unit configured to rotate the rotating part.
(13) In accordance with a preferred embodiment according to any one of the air supply devices mentioned above, the air supply device further comprises a control unit configured to control the drive unit to rotate the rotating part.
(14) In accordance with a preferred embodiment according to any one of the air supply devices mentioned above, the rotating part further includes a gear portion on an outer circumferential surface of the rotating part, the gear portion being engaged with the drive unit.
(15) In view of the state of the know technology, an air supply device according to a second aspect of this disclosure comprises a pump and a flow path switching unit. The pump is configured to supply air. The flow path switching unit includes a pedestal part forming a flow path from the pump to at least one object, a rotating part rotatably provided with respect to the pedestal part to switch the flow path, and a sheet member including a sliding promotion layer disposed between the pedestal part and the rotating part.
   The air supply device according to the second aspect of this disclosure, as described above, comprises the sheet member including the sliding promotion layer disposed between the pedestal part and the rotating part. As a result, the rotating part can be smoothly rotated by the sliding promotion layer of the sheet member.
(16) In accordance with a preferred embodiment according to any one of the air supply devices mentioned above, the air supply device further comprises an enclosure having a sealed interior space for storing air therein. The flow path switching unit is disposed inside the enclosure.
(17) In accordance with a preferred embodiment according to any one of the air supply devices mentioned above, the enclosure includes an air supply port for supplying air from the pump to the interior space of the enclosure, at least one object connection port for supplying air to or exhausting air from the at least one object, and at least one external air supply and exhaust port for supplying air from an outside of the enclosure to the interior space of the enclosure or exhausting air from the interior space of the enclosure to the outside of the enclosure.
(18) In accordance with a preferred embodiment according to any one of the air supply devices mentioned above, the sheet member includes through holes that extends through the first layer and the second layer at locations corresponding to the at least one object connection port and the at least one external air supply and exhaust port.
(19) In accordance with a preferred embodiment according to any one of the air supply devices mentioned above, the first sheet is thicker than the second sheet.
(20) In accordance with a preferred embodiment according to any one of the air supply devices mentioned above, the first sheet and the second sheet have the same overall shape as the pedestal part.

According to the first aspect of the present disclosure, it is possible to provide an air supply device capable of suppressing air leakage and smoothly rotating a rotating part. According to the second aspect of the present disclosure, the rotating part can be smoothly rotated.

### BRIEF DESCRIPTION OF THE DRAWINGS

Referring now to the attached drawings which form a part of this original disclosure;
FIG. 1 is a diagram showing an example of an air supply device.
FIG. 2 is a circuit diagram of the air supply device.
FIG. 3 is a cross-sectional view showing the structure of a flow path switching unit according to a first embodiment.
FIG. 4 is a diagram showing an example of a pedestal part.
FIG. 5 is a diagram showing an example of a rotating part.
FIG. 6 is a diagram showing a flow path through which air flows.
FIG. 7 is a diagram showing an example of a first sheet.
FIG. 8 is a diagram showing an example of a second sheet.
FIG. 9 is a diagram showing a state in which a spring member according to the first embodiment is provided to the rotating part.
FIG. 10 is a diagram showing a bottom of an enclosure.
FIG. 11 is a diagram showing an example of a detector plate.
FIG. 12 is a control flow of a control unit when supplying air to an object (a bag-shaped member).
FIG. 13 is a control flow of the control unit when exhausting air from the object (the bag-shaped member).
FIG. 14 is a cross-sectional view showing the structure of a flow path switching unit according to a second embodiment.
FIG. 15 is a diagram showing a state in which a spring member according to the second embodiment is provided to a rotating part.

### DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims.

### FIRST EMBODIMENT

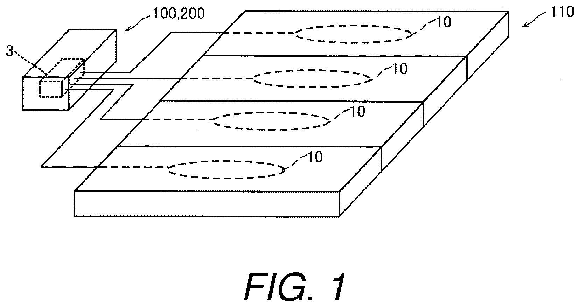

First, with reference to FIG. 1, the configuration of an air supply device 100 according to a first embodiment will be described.

As shown in FIG. 1, the air supply device 100 according to the present embodiment is a device for supplying air to an article 110. Specifically, the air supply device 100 is a device for inflating at least one bag-shaped members 10 (e.g., a plurality of (four) bag-shaped members 10 in FIG. 1) within an article 110 by supplying air to the bag-shaped members 10, and for deflating the bag-shaped members 10 by discharging air from the bag-shaped members 10. The article 110 is, for example, an air mattress, a massage chair, or the like. The bag-shaped members 10 are examples of "at least one object" of the present disclosure.

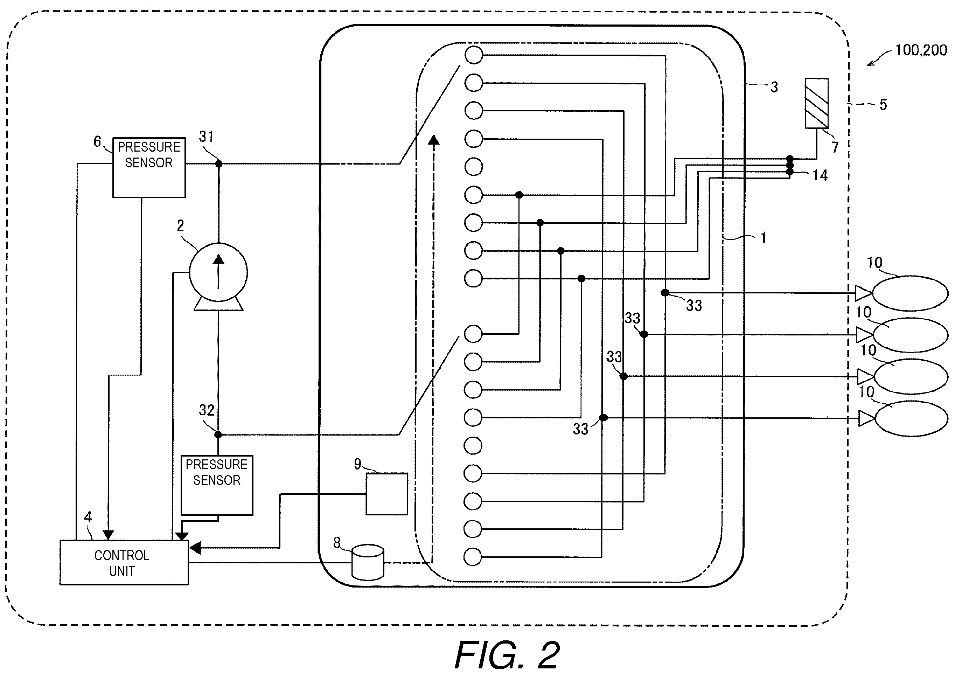

As shown in FIG. 2, the air supply device 100 comprises a flow path switching unit 1 and a pump 2. In the illustrated embodiment, the air supply device 100 comprises an enclosure 3, a control unit or controller 4, a main body 5, a plurality of pressure sensors 6, and a drive unit or driver 8.

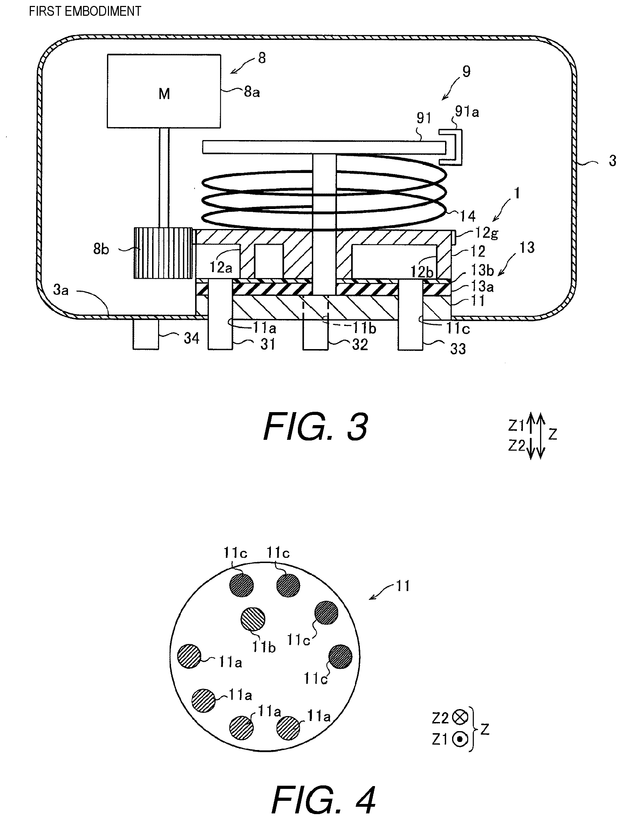

As shown in FIG. 3, the flow path switching unit 1 is mounted on a bottom 3a of the enclosure 3. The flow path switching unit 1 is provided with a pedestal part or pedestal 11, a rotating part or rotor 12, a sheet member or sheet 13, and a spring member or spring 14. The flow path switching unit 1 is configured to switch flow paths supplying air to the bag-shaped members 10 (see FIG. 2) and flow paths exhausting air from the bag-shaped members 10. The flow path switching unit 1 is also configured to switch the bag-shaped members 10 for exhausting air or supplying air among the bag-shaped members 10. The vertical direction of the enclosure 3 is referred to as a Z direction, a top side is referred to as a Z1 side, and the bottom 3a side is referred to as a Z2 side.

As shown in FIG. 4, the pedestal part 11 has a circular shape when viewed from the Z1 side to the Z2 side. The pedestal part 11 is formed of resin. The pedestal part 11 has at least one first hole 11a (e.g., a plurality of first holes 11a in FIG. 4), a second hole 11b, and at least one third hole 11c (e.g., a plurality of third holes 11c in FIG. 4).

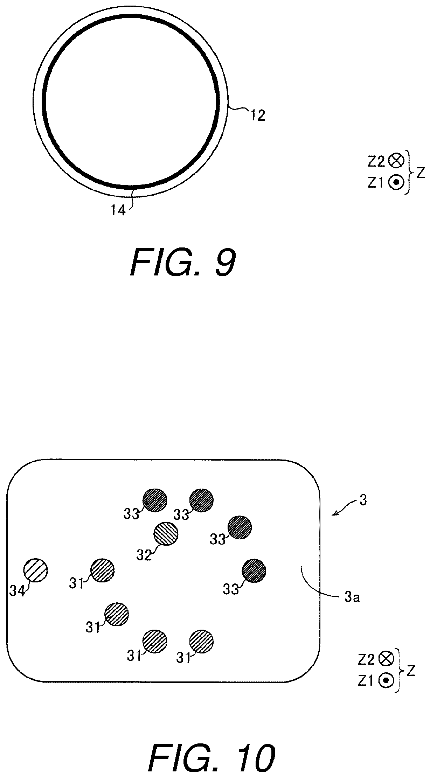

As shown in FIG. 3, when viewed from the Z1 side to the Z 2 side, the first holes 11a are provided at the same positions as at least one object connection ports 31 (e.g., a plurality of object connection ports 31 in FIG. 10) provided in the enclosure 3. The first holes 11a are communicated to the object connection ports 31 provided in the enclosure 3, respectively. The first holes 11a (the object connection ports 31) are circumferentially arranged along the outer peripheral portion of the pedestal part 11 at a predetermined interval. The first holes 11a (the object connection ports 31) are arranged at a predetermined distance interval from a rotational center of the rotating part 12. In the first embodiment, four first holes 11a (four object connection ports 31) are provided.

When viewed from the Z1 side to the Z2 side, the second hole 11b is provided at the same position as an air discharge port 32 provided in the enclosure 3. The second hole 11b (the air discharge port 32) is provided on an inner circumferential side closer to the center than the first holes 11a. The second hole 11b is communicated to the air discharge port 32 provided in the enclosure 3.

When viewed from the Z1 side to the Z2 side, the third holes 11c are provided at the same positions as at least one external air supply and exhaust port 33 (e.g., a plurality of external air supply and exhaust ports 33 in FIG. 10) provided in the enclosure 3. The third holes 11c are communicated to the external air supply and exhaust ports 33 provided in the enclosure 3, respectively. The third holes 11c (the external air supply and exhaust ports 33) are circumferentially arranged around the outer peripheral portion of the pedestal part 11 at a predetermined interval. The third holes 11c are arranged to be point-symmetrical with the first holes 11a with respect to the center of the pedestal part 11 (a rotational center of the rotating part 12). The third holes 11c (the external air supply and exhaust ports 33) are arranged at a predetermined distance interval from the rotational center of the rotating part 12. In the first embodiment, four third holes 11c (four external air supply and exhaust ports 33) are provided.

As shown in FIG. 3, the rotating part 12 is provided to cover an upper surface of the sheet member 13 (see FIG. 3). The rotating part 12 is rotatably provided with respect to the sheet member 13. The rotating part 12 is formed of resin.

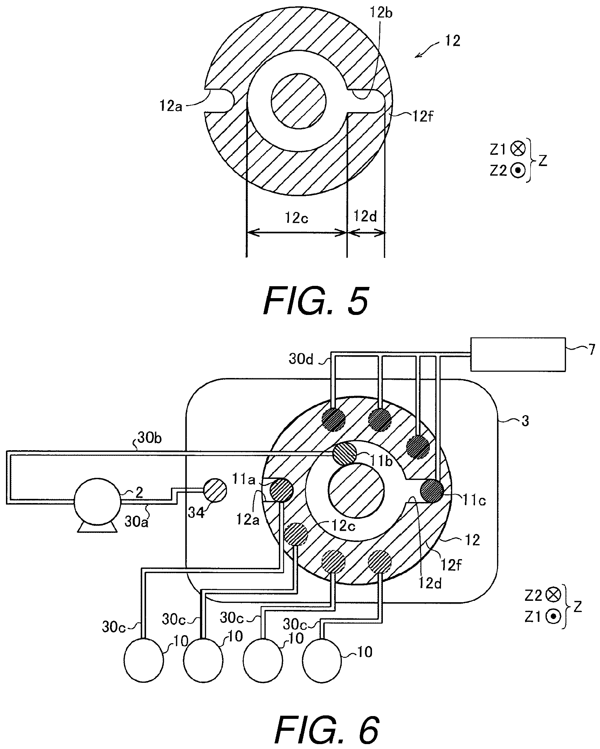

As shown in FIG. 5, the rotating part 12 has a circular shape when viewed from the Z2 side to the Z1 side. The rotating part 12 approximately has the same size as the pedestal part 11. The rotating part 12 switches between an air exhaust state, an air supply state, and a maintained state by rotation. The maintained state is a state in which air supply and exhaust is stopped and an inflated state or a deflated state of the bag-shaped members 10 is maintained. The direction of rotation when switching between the air exhaust state, the air supply state and the maintained state may be the same or different. The rotating part 12 has an enclosure interior space communication portion 12a and a groove portion 12b. The enclosure interior space communication portion 12a and the groove portion 12b each open toward the pedestal part 11 (the Z2 side) and form an air flow path. Specifically, the first holes 11a, the second hole 11b and the third holes 11c provided in the pedestal part 11 and the enclosure interior space communication portion 12a and the groove portion 12b of the rotating part 12 form a flow path. In addition, the portion of the rotating part 12 forming the enclosure interior space communication portion 12a and the groove portion 12b is hereinafter referred to as a wall portion 12f.

The enclosure interior space communication portion 12a is provided on the outer peripheral portion of the rotating part 12. The enclosure interior space communication portion 12a is communicated to an air supply port 34 through an interior space of the enclosure 3. Specifically, the enclosure interior space communication portion 12a opens toward the pedestal part 11 (see FIG. 3) and the enclosure 3 (see FIG. 3) so as to be communicated to the air supply port 34 through the interior space of the enclosure 3. The enclosure interior space communication portion 12a opens in an outer surface (an outer circumferential surface) of the rotating part 12. The enclosure interior space communication portion 12a has an elliptical shape that is inwardly depressed when viewed from the Z2 side to the Z1 side. In the illustrated embodiment, the enclosure interior space communication portion 12a is formed by a notch, but can be formed by a through hole.

As shown in FIG. 6, the enclosure interior space communication portion 12a is disposed on the outer peripheral portion of the rotating part 12 so as to be communicated to the first holes 11a or the third holes 11c. When supplying air, the enclosure interior space communication portion 12a rotates so that a portion of the enclosure interior space communication portion 12a that opens toward the pedestal part 11 (the Z2 side) is communicated to one of the first holes 11a provided in the pedestal part 11 and a flow path is formed between the first hole 11a and the air supply port 34. When supplying air, the portion of the enclosure interior space communication portion 12a that opens toward the pedestal part 11 (the Z2 side) is not directly communicated to the third holes 11c. At this time, one of the third holes 31c is located in the groove portion 12b that is separated from the enclosure interior space communication portion 12a, and other third holes 11c are blocked by the wall portion 12f of the rotating part 12. The rotating part 12 selectively communicates one of the first holes 11a to the enclosure interior space communication portion 12a depending on the rotational position.

When exhausting air, the rotating part 12 rotates so that the portion of the enclosure interior space communication portion 12a that opens toward the pedestal part 11 (the Z2 side) is communicated to one of the third holes 11c provided in the pedestal part 11, and a flow path is formed between the third hole 11c and the air supply port 34. When exhausting air, the portion of the enclosure interior space communication portion 12a that opens toward the pedestal part 11 (the Z2 side) is not directly communicated to the first holes 11a. At this time, one of the first holes 11a is located in the groove portion 12b that is separated from the enclosure interior space communication portion 12a, and other first holes 11a are blocked by the wall portion 12f of the rotating part 12. The rotating part 12 selectively communicates one of the third holes 11c to the enclosure interior space communication portion 12a depending on the rotational position.

During the maintained state, the rotating part 12 rotates so that the portion of the enclosure interior space communication portion 12a that opens toward the pedestal part 11 (the Z2 side) is not communicated to the first holes 11a and the third holes 11c provided in the pedestal part 11. In other words, the first holes 11a and the third holes 11c are blocked by the wall portion 12f, and air is neither supplied to the bag-shaped members 10, nor exhausted from the bag-shaped members 10.

As shown in FIG. 5, the groove portion 12b is provided on the inner peripheral portion of the rotating part 12. The groove portion 12b is separated from the enclosure interior space communication portion 12a. The groove portion 12b is not directly communicated to the enclosure interior space communication portion 12a. The groove portion 12b does not open, except in a surface on the Z2 side, and does not open in the outer circumferential surface since it is surrounded by the wall portion 12f. The groove portion 12b has a circular portion 12c and a protruding portion 12. In particular, the groove portion 12b has the circular portion 12c and the protruding portion 12d that is communicated to the circular portion 12c and outwardly protrudes from the circular portion 12c. The protruding portion 12d is located opposite to the enclosure interior space communication portion 12a with respect to a rotational center of the rotating part 12.

As shown in FIG. 6, the circular portion 12c can be communicated to the second hole 11b. When supplying air, the protruding portion 12d rotates so as to be communicated to one of the third holes 11c. As a result, the third hole 11c and the second hole 11b are communicated. At this time, the first holes 11a are not directly communicated to the protruding portion 12d. One of the first holes 11a is located in the enclosure interior space communication portion 12a and other first holes 11a are blocked by the wall portion 12f. Thus, the first holes 11a and the second hole 11b are not directly communicated. The rotating part 12 selectively communicates one of the third holes 11c and the second hole 11b depending on the rotational position.

When exhausting air, the protruding portion 12d rotates so as to be communicated to one of the first holes 11a. As a result, the first hole 11a and the second hole 11b are communicated. At this time, the third holes 11c are not directly communicated to the protruding portion 12d. One of the third holes 11c is located in the enclosure interior space communication portion 12a and other third holes 11c are blocked by the wall portion 12f. Thus, the third holes 11c and the second hole 11b are not directly communicated. The rotating part 12 selectively communicates one of the first holes 11a and the second hole 11b depending on the rotational position.

During the maintained state, the protruding portion 12d rotates so as not to be communicated to the first holes 11a and the third holes 11c. The first holes 11a and the third holes 11c are blocked by the wall portion 12f, and the first holes 11a and the third holes 11c are not communicated to the second hole 11b. As a result, air is neither supplied to the bag-shaped members 10 nor exhausted from the bag-shaped members 10.

As shown in FIG. 3, the sheet member 13 has a sealing layer and a sliding promotion layer. The sheet member 13 is stacked or laminated in the Z direction. The "sealing layer" is an example of the "first layer" of the present disclosure. The "sliding promotion layer" is an example of the "second layer" described in the present disclosure.

The sheet member 13 comprises a first sheet 13a forming the sealing layer and a second sheet 13b forming the sliding promotion layer. The second sheet 13b is provided separately from the first sheet 13a. The sheet member 13 is attached to the pedestal part 11. The sheet member 13 is formed by a laminate body in which the first sheet 13a and the second sheet 13b are stacked or laminated.

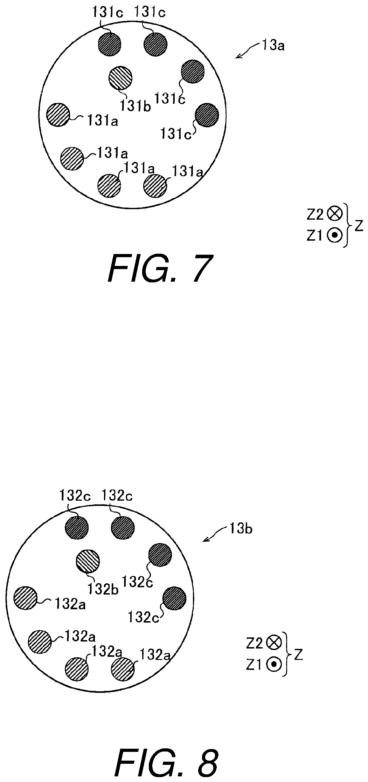

As shown in FIGS. 3 and 7, when viewed from the Z1 side to the Z2 side, the first sheet 13a has the same circular shape as the upper surface (the surface on the Z1 side) of the pedestal part 11. The first sheet 13a is made of an elastomer. For example, the first sheet 13a includes silicone rubber, fluoro rubber, nitrile rubber, butyl rubber or EPDM. In other words, the sealing layer includes an elastomer. The first sheet 13a has a smaller elastic modulus than the second sheet 13b. That is, the sealing layer has a smaller elastic modulus than the sliding promotion layer. The hardness of the first sheet 13a is preferably about 30 (30 Shore A), but within an acceptable air leakage range, for example, can be 20 (20 Shore A) to 75 (75 Shore A) (measured by Durometer Type A), or 20 (20 Shore A) to 70 (75 Shore A). It has been confirmed that when the hardness is set to 20 (20 Shore A), 30 (30 Shore A) and 50 (50 Shore A), there is no problem in the rotation of the rotating part 12 and no air leakage occurs or even if air leakage occurs, it is not a problem. The thickness (the length in the Z direction) of the first sheet 13a is, for example, 0.5 mm to 3 mm. The first sheet 13a is attached so as to cover the upper surface of the pedestal part 11. The first sheet 13a is provided with a plurality of fourth holes 131a that are communicated to the first holes 11a (see FIG. 4) at positions corresponding to the first holes 11a of the pedestal part 11. The first sheet 13a is provided with a fifth hole 131b that is communicated to the second hole 11b at a position corresponding to the second hole 11b (see FIG. 4) of the pedestal part 11. The first sheet 13a is provided with a plurality of sixth holes 131c that are communicated to the third holes 11c (see FIG. 4) at positions corresponding to the third holes 11c of the pedestal part 11.

The upper surface of the pedestal part 11 and the surface of the sheet member 13 are both flat and closely contact to each other without a gap. Here, undulations, which are minute irregularities, can occur in the pedestal part 11, but the first sheet 13a is configured to closely contact the pedestal part 11 in accordance with the undulations, which are minute irregularities of the surface of the pedestal part 11. Specifically, the surface of the first sheet 13a contacting the pedestal part 11 is elastically deformed along the surface of the pedestal part 11. As a result, the pedestal part 11 and the sheet member 13 can closely contact to each other even when the undulations, which are minute irregularities, are generated.

As shown in FIG. 8, the second sheet 13b has the same circular shape as the pedestal part 11 and the first sheet 13a. Thus, in the illustrated embodiment, the first sheet 13a and the second sheet 13b have the same overall shape as the pedestal part 11. The second sheet 13b includes a resin having a smaller friction coefficient than the first sheet 13a. In other words, the sliding promotion layer includes a resin having a smaller friction coefficient than the sealing layer, and the sliding promotion layer has a smaller friction coefficient than the sealing layer. The second sheet 13b includes, for example, Teflon (registered trademark), ultra-high molecular weight polyethylene, nylon or polyacetal. The second sheet 13b is provided with a plurality of seventh holes 132a at positions corresponding to the first holes 11a (see FIG. 4) of the pedestal part 11. The second sheet 13b is provided with an eighth hole 132b at a position corresponding to the second hole 11b (see FIG. 4) of the pedestal part 11. The second sheet 13b is provided with a plurality of ninth holes 132c at positions corresponding to the third holes 11c (see FIG. 4) of the pedestal part 11. In the illustrated embodiment, the second sheet 13b also has a smaller friction coefficient than the pedestal part 11 and the rotating part 12.

The first holes 11a of the pedestal part 11, the fourth holes 131a of the first sheet 13a, and the seventh holes 132a of the second sheet 13b are communicated to each other. Therefore, air can flow from the pedestal part 11 to the rotating part 12, and air can also flow from the rotating part 12 to the pedestal part 11. In addition, the second hole 11b of the pedestal part 11, the fifth hole 131b of the first sheet 13a, and the eighth hole 132b of the second sheet 13b are communicated to each other. Therefore, air can flow from the pedestal part 11 to the rotating part 12, and air can also flow from the rotating part 12 to the pedestal part 11. Furthermore, the third holes 11c of the pedestal part 11, the sixth holes 131c of the first sheet 13a, and the ninth holes 132c of the second sheet 13b are communicated to each other. Therefore, air can flow from the pedestal part 11 to the rotating part 12, and air can also flow from the rotating part 12 to the pedestal part. Thus, the sheet member 13 includes through holes (e.g., the fourth holes 131a, the sixth holes 131c, the seventh holes 132a and the ninth holes 132c) that extends through the first layer (the first sheet 13a) and the second layer (13b) at locations corresponding to the object connection ports 31 and the external air supply and exhaust ports 33. Also, the sheet member 13 includes through holes (e.g., the fifth hole 131b and the eighth hole 132b) that extends through the first layer (the first sheet 13a) and the second layer (13b) at a location corresponding to the air discharge port 32.

The second sheet 13b deforms in accordance with the deformation of the surface of the first sheet 13a that is in contact with the second sheet 13b. Therefore, it is preferable that the thickness (the length in the Z direction) of the second sheet 13b is smaller than the thickness of the first sheet 13a. The thickness of the second sheet 13b is, for example, between 0.1 mm and 0.5 mm. Thus, in the illustrated embodiment, the first sheet 13a is thicker than the second sheet 13b.

As shown in FIGS. 3 and 9, the spring member 14 is a spring, such as a compression coil spring. The spring member 14 is configured to press a vicinity of the outer peripheral portion of the rotating part 12. The vicinity of the outer peripheral portion is a position on the outer peripheral portion side with respect to a position distanced by half the radius from the center of the rotating part 12, more preferably, a position on the outer peripheral portion side with respect to a position distanced by one-third the radius from the center of the rotating part 12. The spring member 14 is preferably provided on the outer peripheral portion side with respect to the protruding portion 12d. Thereby, the outer peripheral portion side with respect to the first holes 11a and the third holes 11c provided in the pedestal part 11 can be pressed, and thus a portion, in which the wall portion 12f is thinner and air tends to leak, can be more closely contacted. In the illustrated embodiment, the spring member 14 contacts the rotating part 12 to directly press the rotating part 12 against the pedestal part 11.

The pressing force of the spring member 14 is greater than the force (the internal pressure of the bag-shaped member 10) obtained by the product of the sum of the cross-sectional areas of the object connection ports 31 and the maximum value of the air pressure of the bag-shaped members 10 (see FIG. 2). The maximum value of the air pressure of the bag-shaped members 10 is the air pressure of the most inflated bag-shaped member 10 when there is more than one bag-shaped members 10. In the first embodiment, since four object connection ports 31 are provided, it is the sum of the cross-sectional areas of the four object connection ports 31. In the first embodiment, since four bag-shaped members 10 are provided, the air pressure of the most inflated bag-shaped member 10 out of the four bag-shaped members 10 is the maximum value of the air pressure.

As shown in FIG. 3, the drive unit 8 is configured to switch the flow path switching unit 1. The drive unit 8 is provided with a motor 8a and a gear 8b. The drive unit 8 may comprise a geared motor. The drive unit 8 rotates the gear 8b by the motor 8a to rotate the rotating part 12. Specifically, the rotating part 12 is provided with a gear portion 12g, and the gear portion 12g and the gear 8b rotate in an engaged state. In particular, the illustrated embodiment, the rotating part 12 includes the gear portion 12g on the outer circumferential surface of the rotating part 12, and the gear portion 12g is engaged with the gear 8b of the drive unit 8. In the first embodiment, the motor 8a is provided inside the enclosure 3, but the motor 8a can also be provided outside the enclosure 3. When the motor 8a is provided outside the enclosure 3, a sealing member may be added to a gap between the enclosure 3 and a rotation shaft of the motor 8a to minimize air leakage from the gap between the rotation shaft and the enclosure 3. Thus, in the illustrated embodiment, the flow path switching unit 1 further includes the drive unit 8 configured to rotate the rotating part 12.

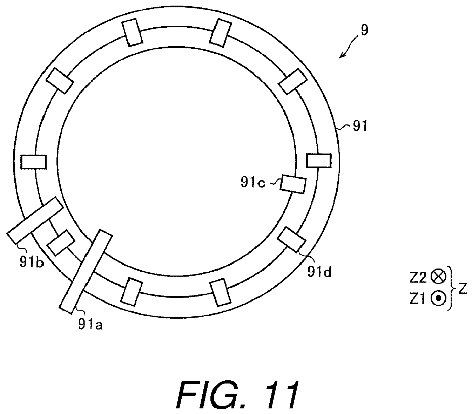

As shown in FIGS. 3 and 11, the air supply device 100 includes a phase detection unit or phase detector 9. The phase detection unit 9 is, for example, a detector plate 91 including an encoder with slits formed at a predetermined interval. With the detector plate 91, a first detection portion 91a and a second detection portion 91b are attached. The first detection portion 91a and the second detection portion 91b each have a light emitter and a detector, respectively. The detector plate 91 also has a first slit 91c indicating an initial position, and a plurality of second slits 91d provided at each predetermined angle. The second slits 91d are provided corresponding to the first holes 11a and the third holes 11c of the pedestal part 11 and positions of the maintained state. In the present embodiment, a total of ten second slits 91d, four corresponding to four first holes 11a, four corresponding to four third holes 11c and two for maintained state positions, are provided at equal intervals (every 36 degrees). The initial position is detected by the first detection portion 91a detecting, by the detector, the light from the light emitter passing through the first slit 91c. Also, a rotational angle is detected by the number of times the second detection portion 91b detects the light passing through the second slits 91d. Depending on the positions of the slits of the encoder, the air supply state, the air exhaust state, and the maintained state can be switched. Here, the phase detection unit 9 may be attached to the flow path switching unit 1 or may be away from the flow path switching unit 1. The phase detection unit 9 may be configured by, for example, a sensor including a detection circuit, as long as it is capable of acquiring a phase change (degree of rotation) of the rotating part 12 of the flow path switching unit 1.

As shown in FIG. 2, the pump 2 is provided inside the main body 5. The pump 2 is also provided outside the enclosure 3. The pump 2 is configured to supply air to the interior space of the enclosure 3. The pump 2 serves as a driving source for distributing air in the air supply device 100. In the illustrated embodiment, the pump 2 is an electric air pump, for example. The pump 2 is stopped when rotating the rotating part 12 of the flow path switching unit 1, as described later.

The enclosure 3 is made of a resin. The enclosure 3 is, for example, a box of a rectangular or cubic shape. The enclosure 3 has a sealed interior space for storing air therein. The flow path switching unit 1 is disposed inside the enclosure 3. The enclosure 3 is arranged inside the main body 5.

The enclosure 3 enables air to be stored in the interior space and has a function of a buffer tank. The buffer tank is a tank whose volume is set to be larger than an inlet to which a pipe is connected. The buffer tank is a tank to reduce fluctuation of air pressure in the buffer tank by the larger volume and to suppress pulsation of outlet pressure.

As shown in FIG. 10, the bottom 3a of the enclosure 3 is provided with the air supply port 34, the air discharge port 32, the object connection ports 31, and the external air supply and exhaust ports 33. In particular, the enclosure includes the air supply port 34 for supplying air from the pump 2 to the interior space of the enclosure 3, the object connection ports for supplying air to or exhausting air from the bag-shaped members 10, and the external air supply and exhaust ports for supplying air from the outside of the enclosure 3 to the interior space of the enclosure 3 or exhausting air from the interior space of the enclosure 3 to the outside of the enclosure 3.

The air supply port 34 is a hole for supplying air from the pump 2 into the interior space of the enclosure 3. A first pipe 30a is connected to the air supply port 34 so as not to form a gap to communicate an air outlet port of the pump 2 and the air supply port 34 (see FIG. 6). One air supply port 34 is provided in the enclosure 3.

The air discharge port 32 is a hole for discharging air from the groove portion 12b to the pump 2. A second pipe 30b is connected to the air discharge port 32 so as not to form a gap to communicate the air discharge port 32 and an air intake port of the pump 2 (see FIG. 6) . One air discharge port 32 is provided in the enclosure 3.

The object connection ports 31 are holes for supplying air to the bag-shaped members 10 or exhausting air from the bag-shaped members 10. Third pipes 30c are connected to the object connection ports 31, respectively, so as not to form a gap to communicate the bag-shaped members 10 and the object connection ports 31 (see FIG. 6). The number of the object connection ports 31 is the same as the number of the bag-shaped members 10. In the first embodiment, four object connection ports 31 are provided.

The external air supply and exhaust ports 33 are holes for supplying air from the outside of the enclosure 3 to the interior space of the enclosure 3 or for exhausting air from the interior space of the enclosure 3 to the outside of the enclosure 3. Fourth pipes 30d (see FIG. 6) are connected to the external air supply and exhaust ports 33 so as not to form a gap. In the illustrated embodiment, the fourth pipes 30d merge into a single pipe, one end of which opens to the outside and is connected to the silencer 7. The external air supply and exhaust ports 33 may be provided in the same number as the number of the bag-shaped members 10, or may be different. In the first embodiment, four external air supply and exhaust ports 33 are provided.

As shown in FIG. 6, one ends of the fourth pipes 30d are connected to the external air supply and exhaust ports 33. As shown in FIG. 6, the silencer 7 is connected to the one end of the single pipe, into which the fourth pipes 30d merge. The silencer 7 is, for example, a cover member made of urethane. The silencer 7 is a device for muffling the sound when exhausting air from the external air supply and exhaust ports 33 and for muffing the sound when supplying air to the external air supply and exhaust ports 33. In the illustrated embodiment, one ends of the fourth pipes 30d merge into the single pipe. However, the one ends of the fourth pipes 30d can have openings that are open to the outside and can be connected to silencers 7, respectively.

As shown in FIG. 2, the control unit 4 is configured to control the pump 2 and the rotating part 12. The control unit 4 is configured to control the pump 2 and the rotating part 12 by receiving an external input. The control unit 4 is configured to supply air to the bag-shaped members 10, or exhaust air from the bag-shaped members 10. The control unit 4 is also configured to stop rotation of the rotating part 12 based on detection result by the detector plate 91. The control unit 4 is also configured to stop driving of the pump 2 based on the air pressure of the interior space of the enclosure 3 measured by the pressure sensors 6, and to switch from the air supply state or the air exhaust state to the maintained state by rotating the rotating part 12. The control unit 4 is also configured to switch the bag-shaped members 10 for supplying and exhausting air according to an external input. In the illustrated embodiment, the control unit or controller 4 includes a processor or electrical controller which is a hardware device capable of executing a software program, and does not include a human. In the illustrated embodiment, the control unit 4 includes a CPU. However, in some cases, the control unit 4 can be configured to comprise, instead of the CPU or in addition to the CPU, programmable logic devices such as a DSP (Digital Signal Processing or Processor), an FPGA (Field Programmable Gate Array), and the like. In addition, the control unit 4 can include a plurality of processors or CPUs that execute the processing sequences of the present disclosure together. In the illustrated embodiment, the control unit 4 is electrically or operatively connected to the pump 2, and is configured to control the pump 2. The control unit 4 is electrically or operatively connected to the pressure sensors 6, and is configured to control the pump 2 or the drive unit 8 based on the detection results of the pressure sensors 6. The control unit 4 is electrically or operatively connected to the drive unit 8, and is configured to control the drive unit 8 to rotate the rotating part 12. The control unit 4 is electrically or operatively connected to the phase detection unit 9, and is configured to control the pump 2 or the drive unit 8 based on the detection result of the phase detection unit 9. Thus, in the illustrated embodiment, the control unit 4 is configured to control the drive unit 8 to rotate the rotating part 12.

The pump 2, the enclosure 3, the control unit 4, and the pressure sensors 6 are arranged inside the main body 5. The main body 5 is, for example, a box made of resin. The main body 5 is also provided with a power supply (not shown) for driving the pump 2 and the flow path switching unit 1. Also, the power supply supplies electric power to the control unit 4, the pressure sensors 6 and the phase detection unit 9, as needed and/or desired.

The pressure sensors 6 measure the pressure of air supplied to the interior space of the enclosure 3 or exhausted from the interior space of the enclosure 3. The pressure sensors 6 are provided to the first pipe 30a connected between the air outlet port of the pump 2 and the air supply port 34 (on the air outlet port side of the pump 2) and the second pipe 30b connected between the air discharge port 32 and the air inlet port of the pump 2 (on the air inlet port side of the pump 2), respectively. When the pressure sensor 6 on the first pipe 30a detects a pressure equal to or higher than a predetermined value, the control unit 4 is configured to stop the pump 2. Also, when the pressure sensor 6 on the second pipe 30b detects a pressure below a predetermined value, the control unit 4 is configured to stop the pump 2. The predetermined values of the two pressure sensors 6 are different, and for example, the predetermined value for the pressure sensor 6 on the first pipe 30a is a positive value and the predetermined value for the pressure sensor 6 on the second pipe 30b is 0 or a negative value.

### (Control When Supplying Air)

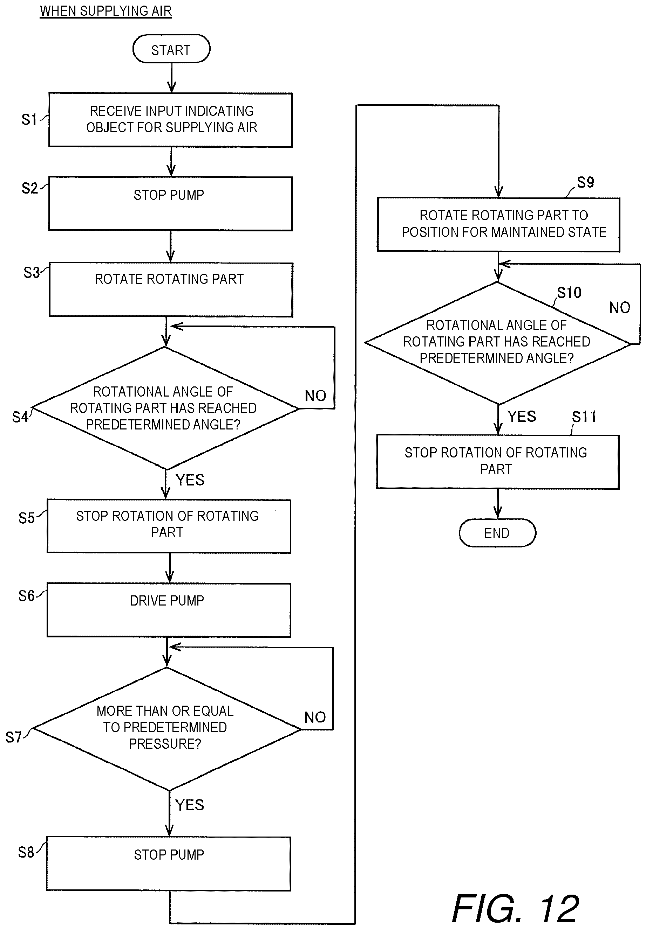

The control of the control unit 4 when supplying air will be described based on FIG. 12. First, as step S1, the control unit 4 receives an input indicating a bag-shaped member 10 as an object or target for supplying air. The input is, for example, an input by a remote controller or an operation button.

In step S2, the control unit 4 stops the pump 2. In step S3, the control unit 4 controls the drive unit 8 to rotate the rotating part 12 at a predetermined angle or at a predetermined interval by driving the motor 8a of the drive unit 8. The predetermined angle of the rotating part 12 is set in accordance with the interval at which the first holes 11a and the third holes 11c are arranged by using a position at which the first detection portion 91a and the second detection portion 91b both detect light as the initial position (i.e., 0 degrees). The initial position is also a position in which air supply and exhaust to all the bag-shaped members 10 are also stopped. When the rotating part 12 is located at the initial position, the control unit 4 rotates the rotating part 12 to the predetermined angle. Specifically, the control unit 4 rotates the rotating part 12 until the second detection portion 91b detects light a predetermined number of times corresponding to the predetermined angle. When the rotating part 12 has been rotated from the initial position (e.g., when air is being supplied to other bag-shaped member 10), the control unit 4 rotates the rotating part 12 by an angular difference obtained by subtracting a rotational angle that has already been rotated from an angle between the initial position and a position corresponding to the target bag-shaped member 10. Specifically, the control unit 4 controls the drive unit 8 to rotate the rotating part 12 until the second detection portion 91b detects light a predetermined number of times corresponding to the angular difference.

In step S4, the control unit 4 performs the next control differently depending on whether the rotational angle of the rotating part 12 is the predetermined angle or not. Specifically, the control unit 4 acquires the detection result detected by the detector plate 91, and if the rotational angle of the rotating part 12 is the predetermined angle, or in other words, if the second detection portion 91b detects light the predetermined number of times, then it proceeds to step S5. On the other hand, if the second detection portion 91b has not detected light the predetermined number of times, then step S4 is repeated until the predetermined angle is reached (until light is detected the predetermined number of times).

In step S5, the control unit 4 stops the motor 8a of the drive unit 8 to stop the rotation of the rotating part 12.

In step S6, the control unit 4 drives the pump 2 to supply air to the bag-shaped member 10. In step S7, the control unit 4 changes the control depending on whether or not the pressure detected by the pressure sensor 6 provided to the first pipe 30a is more than or equal to the predetermined value. If it is more than or equal to the predetermined value, then it proceeds to step S8 and the control unit 4 stops the pump 2. If it is less than the predetermined value, then step S7 is repeated until it becomes more than or equal to the predetermined value.

After stopping the pump 2 in step S8, in step S9, the control unit 4 controls the drive unit 8 to rotate the rotating part 12 to the position for the maintained state. In step S10, the control unit 4 performs the next control differently depending on whether the rotational angle of the rotating part 12 is the predetermined angle or not. Specifically, the control unit 4 acquires the detection result detected by the detector plate 91, and if the rotational angle of the rotating part 12 is the predetermined angle, then it proceeds to step S11. A case in which the rotational angle of the rotating part 12 is the predetermined angle means a case in which the second detection portion 91b detects light the predetermined number of times. On the other hand, if the second detection portion 91b has not detected light the predetermined number of times, then step S10 is repeated until the predetermined angle is reached (until light is detected the predetermined number of times). In step S11, the control unit 4 stops the motor 8a of the drive unit 8 to stop the rotation of the rotating part 12. With this configuration, the bag-shaped members 10 can maintain the inflated state.

### (Control When Exhausting Air)

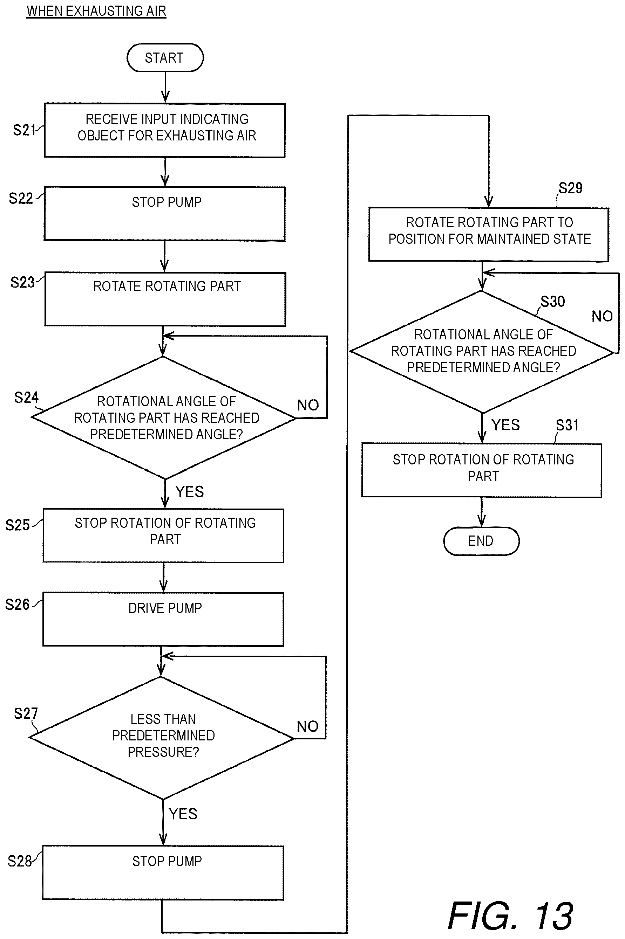

The control of the control unit 4 when exhausting air will be described based on FIG. 13. First, as step S21, the control unit 4 receives an input indicating a bag-shaped member 10 as an object or target for exhausting air.

In step S22, the control unit 4 stop the pump 2. In step S23, the control unit 4 controls the drive unit 8 to rotate the rotating part 12 at a predetermined angle or at a predetermined interval by driving the motor 8a of the drive unit 8. The predetermined angle of the rotating part 12 is set in accordance with the interval at which the first holes 11a and the third holes 11c are arranged by using a position at which the first detection portion 91a and the second detection portion 91b both detect light as the initial position (i.e., 0 degrees). The initial position is also a position in which air supply and exhaust to all the bag-shaped members 10 are also stopped. When the rotating part 12 is located at the initial position, the control unit 4 rotates the rotating part 12 to the predetermined angle. Specifically, the control unit 4 rotates the rotating part 12 until the second detection portion 91b detects light a predetermined number of times corresponding to the predetermined angle. When the rotating part 12 has been rotated from the initial position (e.g., when air is being exhausted from other bag-shaped member 10), the control unit 4 rotates the rotating part 12 by an angular difference obtained by subtracting a rotational angle that has already been rotated from an angle between the initial position and a position corresponding to the target bag-shaped member 10. Specifically, the control unit 4 controls the drive unit 8 to rotate the rotating part 12 until the second detection portion 91b detects light a predetermined number of times corresponding to the angular difference.

In step S24, the control unit 4 performs the next control differently depending on whether the rotational angle of the rotating part 12 is the predetermined angle or not. Specifically, the control unit 4 acquires the detection result detected by the detector plate 91, and if the rotational angle of the rotating part 12 is the predetermined angle, or in other words, if the second detection portion 91b detects light the predetermined number of times, then it proceeds to step S25. On the other hand, if the second detection portion 91b has not detected light the predetermined number of times, then step S24 is repeated until the predetermined angle is reached (until light is detected the predetermined number of times).

In step S25, the control unit 4 stops the motor 8a of the drive unit 8 to stop the rotation of the rotating part 12.

In step S26, the control unit 4 drives the pump 2 to exhaust air from the bag-shaped member 10. In step S27, the control unit 4 changes the control depending on whether or not the pressure detected by the pressure sensor 6 provided to the second pipe 30b is less than the predetermined value. If it is less than the predetermined value, then it proceeds to step S28 and the control unit 4 stops the pump 2. If it is more than or equal to the predetermined value, then step S27 is repeated until it becomes less than the predetermined value.

After stopping the pump 2 in step S28, in step S29, the control unit 4 controls the drive unit 8 to rotate the rotating part 12 to the position for the maintained state. In step S30, the control unit 4 performs the next control differently depending on whether the rotational angle of the rotating part 12 is the predetermined angle or not. Specifically, the control unit 4 acquires the detection result detected by the detector plate 91, and if the rotational angle of the rotating part 12 is the predetermined angle, or in other words, if the second detection portion 91b detects light the predetermined number of times, it proceeds to step S31. On the other hand, if the second detection portion 91b has not detected light the predetermined number of times, then step S30 is repeated until the predetermined angle is reached (until the second detection portion 91b detects light the predetermined number of times). In step S31, the control unit 4 stops the motor 8a of the drive unit 8 to stop the rotation of the rotating part 12. With this configuration, the bag-shaped members 10 can maintain the deflated state.

### (Effects of First Embodiment)

In the first embodiment, the following effects can be obtained.

In the first embodiment, as described above, the air supply device 100 comprises the sheet member 13 disposed between the pedestal part 11 and the rotating part 12. The sheet member 13 has the first layer and the second layer that are stacked in the direction directing from the rotating part 12 to the pedestal part 11. The first layer has a smaller elastic modulus than the second layer. The second layer has a smaller friction coefficient than the first layer. With this configuration, the first layer of the sheet member 13 has a smaller elastic modulus than the second layer. Therefore, the rotating part 12 or the pedestal part 11 and the sheet member 13 can closely contact to each other by elastic deformation of the first layer, and thus formation of a gap can be prevented. As a result, since the first layer functions as a sealing layer, air leakage can be suppressed. In addition, since the second layer has a smaller friction coefficient than the first layer, sliding of the rotating part 12 against the pedestal part 11 can be facilitated compared to a case in which only a first layer is provided, and thus the rotating part 12 can be rotated smoothly against the pedestal part 11. As a result, air leakage can be suppressed and the rotating part 12 can be rotated smoothly.

In the first embodiment, as described above, the first layer is located closer to the pedestal part 11 than the second layer. The second layer is located closer to the rotating part 12 than the first layer. Thus, the first layer is located on the pedestal part 11 side of the sheet member 13 and the second layer is located on the rotating part 12 side, for example. With this configuration, the sheet member 13 and the pedestal part 11 can closely contact to each other by contacting the pedestal part 11 and the first layer having a small elastic modulus. In addition, the rotating part 12 can be rotated more smoothly by contacting the rotating part 12 and the second layer having a small friction coefficient.

In the first embodiment, as described above, the first layer closely contacts the pedestal part 11 in accordance with undulations that are minute irregularities in the surface of the pedestal part 11. With this configuration, even when there are undulations that are minute irregularities in the surface of the pedestal part 11, the pedestal part 11 and the sheet member 13 can closely contact to each other, and thus it is possible to prevent a gap from being formed between the pedestal part 11 and the sheet member 13.

In the first embodiment, as described above, the sheet member 13 includes the first sheet 13a forming the first layer and the second sheet 13b forming the second layer. The second sheet 13b is provided separately from the first sheet 13a. With this configuration, the first layer and the second layer are provided separately. Therefore, the first sheet 13a can be changed to a first sheet 13a having a smaller elastic modulus as appropriate, and the second sheet 13b can be changed to a second sheet 13b having a smaller friction coefficient as appropriate. Thus, the sheet member 13 and the pedestal part 11 can more appropriately and closely contact to each other and the rotating part 12 can be more appropriately and smoothly rotated.

In the first embodiment, as described above, the first layer includes an elastomer and the second layer includes a resin having a smaller friction coefficient than the first layer. With this configuration, for example, when the second layer includes nylon, which is a resin having a smaller friction coefficient, the elastic modulus of the first layer can be smaller than that of the second layer since the elastomer has a smaller elastic modulus than the nylon, and the friction coefficient of the second layer can be smaller than that of the first layer.

In the first embodiment, as described above, the sheet member 13 is attached to the pedestal part 11. With this configuration, when the sheet member 13 and the pedestal part 11 are each provided with a hole for forming a flow path, the hole provided in the sheet member 13 can be easily aligned to the hole in the pedestal part 11.

In the first embodiment, as described above, the air supply device 100 further comprises the spring member 14 disposed on the surface of the rotating part 12 that faces away from the pedestal part 11. The spring member 14 is configured to press the rotating part 12 against the pedestal part 11. With this configuration, since the spring member 14 presses the rotating part 12, the pedestal part 11, the sheet member 13 and the rotating part 12 can more closely contact to each other. As a result, it is possible to prevent the formation of a gap between the rotating part 12 and the pedestal part 11 and to further suppress air leakage.

In the first embodiment, as described above, the spring member 14 is configured to press the vicinity of the outer peripheral portion of the rotating part 12. With this configuration, it is possible to prevent deformation of the outer peripheral portion of the sheet member 13 that is pressed through the rotating part 12 in a direction opposite to a direction in which the rotating part is pressed.

In the first embodiment, as described above, the air supply device 100 further comprises the object connection ports 31 for supplying air to the bag-shaped members 10. The spring member 14 is configured such that the force to press down the rotating part 12 is greater than the force obtained by the product of the sum of the cross-sectional areas of the object connection ports 31 and the maximum value of the air pressure inside the bag-shaped members 10. With this configuration, the force of the spring member 14 to press down the rotating part 12 is greater than the internal pressure that is applied to the flow path switching unit 1 from the bag-shaped members 10 and is obtained by the product of the sum of the cross-sectional areas of the object connection ports 31 and the maximum value of the air pressure inside the bag-shaped members. Thus, it is possible to prevent a gap from being formed by the internal pressure from the bag-shaped members 10 that tends to push up the pedestal part 11.

### SECOND EMBODIMENT

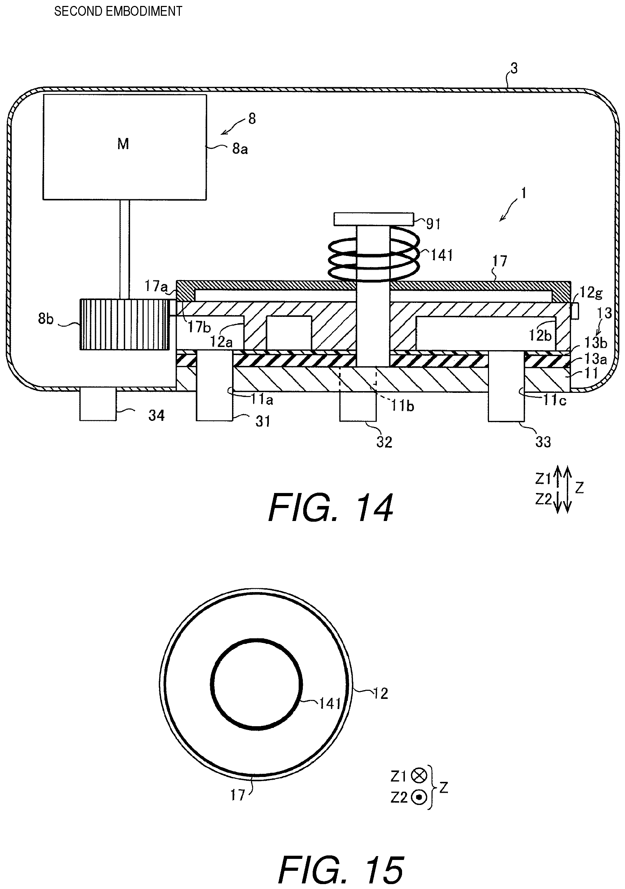

With reference to FIGS. 14 and 15, a second embodiment will be described. With an air supply device 200 in accordance with this second embodiment, the flow path switching unit 1 is further provided with a disc-shaped pressure member 17. The parts of the second embodiment that are identical or substantially or functionally identical to the parts of the first embodiment will be given the same reference numerals, and the descriptions thereof will be omitted for the sake of brevity.

As shown in FIG. 14, the air supply device 200 according to the second embodiment is further provided with the disc-shaped pressure member 17. The pressure member 17 has a concave shape that is depressed on the Z1 side in a cross-sectional view.

As shown in FIGS. 14 and 15, the pressure member 17 is disposed between a spring member 141 and the rotating part 12 in an attachment direction (the Z direction) of the rotating part 12 and the pedestal part 11. The pressure member 17 has a protruding portion or rim 17a protruding from a bottom surface (a surface on the Z2 side) toward the rotating part 12 (the Z2 side). The pressure member 17 is configured to press the upper surface (a surface on the Z1 side) of the rotating part 12 near the vicinity of the outer peripheral portion of the rotating part 12 by the protruding portion 17a. The vicinity of the outer peripheral portion is a position on the outer peripheral portion side with respect to a position distanced by half the radius from the center of the rotating part 12, more preferably, a position on the outer peripheral portion side with respect to a position distanced by one-third the radius from the center of the rotating part 12. The pressure member 17 is preferably provided on the outer peripheral portion side with respect to the protruding portion 12d. Thereby, the outer peripheral portion side with respect to the first holes 11a and the third holes 11c provided in the pedestal part 11 can be pressed, and thus a portion, in which the wall portion 12f is thinner and air tends to leak, can be more closely contacted.

The pressure member 17 does not contact the rotating part 12, except for a bottom surface (a surface on the Z2 side) 17b of the protruding portion 17a. Therefore, it is possible to apply the pressing force only on the outer peripheral portion of the rotating part 12. The protruding portion 17a is arranged in a circular ring or rim shape along an outer periphery of the pressure member 17. The protruding portion 17a may be provided intermittently, but it is preferable to be provided continuously from the viewpoint of uniformly pressing the outer periphery of the rotating part 12. The pressure member 17 is the same size as the rotating part 12 as viewed in the Z direction. In FIG. 15, the pressure member 17 is illustrated as being smaller than the rotating part 12 for convenience.

In the second embodiment, the spring member 141 is disposed in the vicinity of the center of the pressure member 17. The size of the spring member 141 is smaller than the pressure member 17. Therefore, the center portion of the pressure member 17 may be slightly deformed (concaved) toward the rotating part 12. Therefore, the protrusion amount of the protruding portion 17a is set to a size that can avoid the center portion of the pressure member 17 contacting the rotating part 12 even when the center portion of the pressure member 17 is slightly deformed toward the rotating part 12.

Other configurations of the air supply device 200 according to the second embodiment are the same as those of the air supply device 100 according to the first embodiment described above.

### (Effects of Second Embodiment)

In the second embodiment, the following effects can be obtained.

In the second embodiment, as described above, the air supply device 200 comprises the sheet member 13 disposed between the pedestal part 11 and the rotating part 12. The sheet member 13 has the first layer and the second layer that are stacked in the direction directing from the rotating part 12 to the pedestal part 11. The first layer has a smaller elastic modulus than the second layer. The second layer has a smaller friction coefficient than the first layer. With this configuration, the first layer of the sheet member 13 has a smaller elastic modulus than the second layer. Therefore, the rotating part 12 or the pedestal part 11 and the sheet member 13 can closely contact to each other by elastic deformation of the first layer, and thus formation of a gap can be prevented. As a result, since the first layer functions as a sealing layer, air leakage can be suppressed. In addition, since the second layer has a smaller friction coefficient than the first layer, sliding of the rotating part 12 against the pedestal part 11 can be facilitated compared to a case in which only a first layer is provided, and thus the rotating part 12 can be rotated smoothly against the pedestal part 11. As a result, air leakage can be suppressed and the rotating part 12 can be rotated smoothly.

In the second embodiment, as described above, the air supply device 200 further comprises the disc-shaped pressure member 17 disposed between the spring member 141 and the rotating part 12. The rotating part 12 is configured to be pressed against the pedestal part 11 by the spring member 141 and the pressure member 17. With this configuration, the rotating part 12 is pressed against the pedestal part 11 by the pressure member 17. Thus, there is no need to increase the size of the spring member 141 in order to increase the pressing force of the spring member 141. As a result, even with a small spring member 141, it is possible to prevent the formation of a gap between the rotating part 12 and the pedestal part 11.

Other effects of the air supply device 200 according to the second embodiment are the same as those of the air supply device 100 according to the first embodiment described above.

### MODIFICATION EXAMPLES

The embodiments disclosed here should be considered in all respects to be illustrative and not restrictive. The scope of the invention is indicated by the claims, not by the description of the embodiments described above, and furthermore includes all changes (modification examples) within the meaning and scope of protection defined by the appended claims.

For example, in the first embodiment and the second embodiment above, examples are shown in which the sheet member comprises the first sheet and the second sheet, but the present invention is not limited to this. For example, the sheet member may be a composite material integrally combining two or more different materials.

In the first embodiment and the second embodiment, examples are shown in which the first layer is located on the pedestal part side, but the present invention is not limited to this. For example, the second layer may be positioned on the pedestal part side.

In the first embodiment and the second embodiment, examples are shown in which the sheet member is attached to the pedestal part, but the present invention is not limited to this. For example, the sheet member may be attached to the rotating part. In this case, the sheet member is provided with holes or openings in accordance with the positions and the shape of the enclosure interior space communication portion and the groove portion of the rotating part.

In the first embodiment and the second embodiment, examples are shown in which the sheet member is attached to the pedestal part, but the present invention is not limited to this. For example, the first layer may be attached to the rotating part and the second layer may be attached to the pedestal part, or the first layer may be attached to the pedestal part and the second layer may be attached to the rotating part.

In the first embodiment and the second embodiment, examples are shown in which the external air supply and exhaust ports are provided at the bottom of the enclosure 3, but the present invention is not limited to this. For example, the external air supply and exhaust ports may not be provided. In this case, the air discharge port may be configured to open to the outside without being connected to the pump to discharge air from the groove portion.

In the first embodiment and the second embodiment, examples are shown in which the enclosure is provided, but the present invention is not limited to this. For example, a groove may be provided on the outer peripheral portion of the rotating part without an enclosure.

In the second embodiment, an example is shown in which the pressure member has a concave shape in a cross-sectional view, but the present invention is not limited to this, and the pressure member may be a flat plate in a cross-sectional view.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

As used herein, the following directional terms "forward", "rearward", "front", "rear", "up", "down", "above", "below", "upward", "downward", "top", "bottom", "side", "vertical", "horizontal", "perpendicular" and "transverse" as well as any other similar directional terms refer to those directions of an air supply device in an upright position on a horizontal surface. Accordingly, these directional terms, as utilized to describe the air supply device should be interpreted relative to an air supply device in an upright position on a horizontal surface.

The phrase "at least one of" as used in this disclosure means "one or more" of a desired choice. For one example, the phrase "at least one of" as used in this disclosure means "only one single choice" or "both of two choices" if the number of its choices is two. For another example, the phrase "at least one of" as used in this disclosure means "only one single choice" or "any combination of equal to or more than two choices" if the number of its choices is equal to or more than three. Also, the term "and/or" as used in this disclosure means "either one or both of".

The term "attached" or "attaching", as used herein, encompasses configurations in which an element is directly secured to another element by affixing the element directly to the other element; configurations in which the element is indirectly secured to the other element by affixing the element to the intermediate member(s) which in turn are affixed to the other element; and configurations in which one element is integral with another element, i.e. one element is essentially part of the other element. This definition also applies to words of similar meaning, for example, "joined", "connected", "coupled", "mounted", "bonded", "fixed" and their derivatives. Finally, terms of degree such as "substantially", "about" and "approximately" as used herein mean an amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims.

## Claims

1. An air supply device comprising:
a pump configured to supply air; and
a flow path switching unit including
a pedestal part forming a flow path from the pump to at least one object,
a rotating part rotatably provided with respect to the pedestal part to switch the flow path, and
a sheet member disposed between the pedestal part and the rotating part, the sheet member having a first layer and a second layer that are stacked in a direction directing from the rotating part to the pedestal part,
the first layer having a smaller elastic modulus than the second layer, and
the second layer having a smaller friction coefficient than the first layer.

2. The air supply device according to claim 1, wherein
the first layer is located closer to the pedestal part than the second layer, and
the second layer is located closer to the rotating part than the first layer.

3. The air supply device according to claim 2, wherein
the first layer closely contacts the pedestal part in accordance with undulations that are minute irregularities in a surface of the pedestal part.

4. The air supply device according to any one of claims 1 to 3, wherein
the sheet member includes a first sheet forming the first layer and a second sheet forming the second layer, the second sheet being provided separately from the first sheet.

5. The air supply device according to any one of claims 1 to 4, wherein
the first layer includes an elastomer, and
the second layer includes a resin having a smaller friction coefficient than the first layer.

6. The air supply device according to any one of claims 1 to 5, wherein
the sheet member is attached to the pedestal part.

7. The air supply device according to any one of claims 1 to 6, further comprising
a spring member disposed on a surface of the rotating part that faces away from the pedestal part, the spring member being configured to press the rotating part against the pedestal part.

8. The air supply device according to claim 7, wherein
the spring member is configured to press a vicinity of an outer peripheral portion of the rotating part.

9. The air supply device according to claim 7 or 8, further comprising
at least one object connection port configured to supply air to the at least one object,
the spring member being configured such that a force to press down the rotating part is greater than a force obtained by a product of a sum of a cross-sectional area of the at least one object connection port and a maximum value of an air pressure inside the at least one object.

10. The air supply device according to any one of claims 7 to 9, further comprising
a disc-shaped pressure member disposed between the spring member and the rotating part, the rotating part being configured to be pressed against the pedestal part by the spring member and the pressure member.

11. The air supply device according to any one of claims 7 to 9, wherein
the spring member contacts the rotating part to directly press the rotating part against the pedestal part.

12. The air supply device according to any one of claims 1 to 11, wherein
the flow path switching unit further includes a drive unit configured to rotate the rotating part.

13. The air supply device according to claim 11, further comprising
a control unit configured to control the drive unit to rotate the rotating part.

14. The air supply device according to claim 12, wherein
the rotating part further includes a gear portion on an outer circumferential surface of the rotating part, the gear portion being engaged with the drive unit.

15. An air supply device comprising:
a pump configured to supply air; and
a flow path switching unit including
a pedestal part forming a flow path from the pump to at least one object,
a rotating part rotatably provided with respect to the pedestal part to switch the flow path, and
a sheet member including a sliding promotion layer disposed between the pedestal part and the rotating part.
